# EUROPEAN PATENT APPLICATION

(11) **EP 1 013 971 A2**
(43) Date of publication of application: **28.06.2000**
(21) Application number: 99850208.2
(22) Date of filing: 22.12.1999
(51) Int. Cl.: F16H 57/02

(54) **Gearbox for motor vehicle**

(30) Priority: 23.12.1998 SE 9804522
(71) Applicant: SCANIA CV AKTIEBOLAG, S-151 87 Södertälje (SE)
(72) Inventor: Hagberg, Kenneth, 151 45 Södertälje (SE); Koppala, Jorma, 135 42 Tyresö (SE); Slapak, Dieter, 151 47 Södertälje (SE); Nordkvist, Johan, 151 35 Södertälje (SE); Nilsson, Hilding, 155 91 Nykvarn (SE)
(74) Representative: Waldebäck, Hans Olov

(57) **Abstract**

A gearbox for motor vehicle has a housing (2) in which at least two shafts (3,4) are supported in the ends of the housing, which housing consists of sections (5,6). The housing sections (5,6) are made of different materials with different longitudinal expansion coefficients and the ratio between their lengths (x,y) is such that the longitudinal expansion of the housing during operation will be substantially equal to the longitudinal expansion of the shafts during operation.

## Description

### Technical field

The present invention relates to a gearbox for motor vehicle, according to the preamble to patent claim 1.

### State of the art

The loading which occurs during the operation of a motor vehicle causes considerable heating in its gearbox, resulting in shafts and housing being subject to temperature rise and expanding. The air flow caused by movement of the vehicle provides a certain amount of cooling for the housing, which therefore does not become as hot as the shafts. The shafts are usually made of steel, whereas the housing is made of different material. This results in differences in longitudinal expansion which may cause troublesome changes in bearing play, with consequent problems of wear and power losses.

The shafts are often supported by taper roller bearings, which have good capacity for absorbing axial loads and are relatively inexpensive. A disadvantage, however, is that the bearing play, which is normally set at ambient temperature, needs to be kept within specific values if the bearing is to function properly during the temperature changes to which the gearbox is subject.

If the housing is made of aluminium, as is often done for weight reduction reasons, temperature rise causes a greater change in the length of the housing than in that of the shafts. The result is increased bearing play, causing shorter bearing life, inferior gearwheel engagement etc. In this connection, DE 3417699 proposed that the shafts be made telescopic and be provided with a temperature compensating device to limit the changes in bearing play, but that solution is expensive and complicated.

If instead the housing is made of cast iron, temperature rise causes more change in the length of the shafts than in that of the housing, which means that bearing play is reduced and may be converted to preloading. The result in that case will be increased inertia and greater losses in the gearbox and possibly unacceptably large gearchange forces. The life of preloaded bearings will also be shortened.

### Object of the invention

The object of the invention is to provide a gearbox which is not subject to the disadvantages indicated above. A further object is to provide a gearbox which is easy and inexpensive to manufacture and uncomplicated to maintain.

### Description of the invention

The object of the invention is achieved by a gearbox of the kind indicated in the introduction, with the features which are indicated in patent claim 1.

Dividing the housing substantially perpendicular to the shafts and having its respective sections made of different materials with different longitudinal expansion coefficients makes it possible, through mutual adaptation of the length of the sections of the housing, to achieve during vehicle operation substantially equal longitudinal expansion for the housing and the shafts. This makes it easy to reduce the changes in bearing play, with consequent operational and wear advantages.

The housing may with advantage consist of two sections, e.g. one of them made of light metal and the other made of cast iron. It is advantageous that the housing section which has the larger longitudinal expansion coefficient be shorter than the other section of the housing.

Further features and advantages of the invention are indicated by the following description and patent claims.

The invention is described below in more detail with reference to an embodiment depicted in the attached drawing.

### Description of drawing

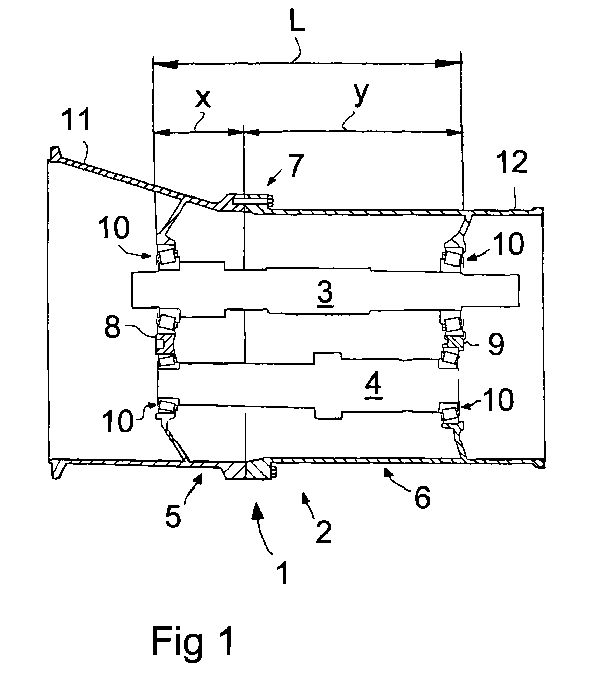

Fig. 1 shows a schematic longitudinal section through a gearbox according to the invention.

### Description of an embodiment

The drawing depicts schematically a gearbox 1 which is intended to be fitted to a motor vehicle. Such a gearbox is subject to relatively considerable heating during operation and may reach a working temperature exceeding 90°C. A certain amount of cooling takes place via the gearbox housing, which therefore has a lower temperature than the interior of the gearbox. In some cases the gearbox may be so fitted that the air flow caused by the movement of the vehicle provides relatively good cooling, whereas in other cases reasons pertaining to noise make it necessary for the gearbox to be encased and hence have inferior cooling. Cooling of the oil in the gearbox is often also used to limit the temperature increase.

The gearbox 1 has a housing 2 in which there are at least two shafts 3 and 4 which support gearwheels and other components (not depicted here in detail) which are normally incorporated in a gearbox. The housing 2 takes the form here of two sections, namely a first housing section 5 and a second housing section 6, which are joined together by a connection 7, e.g. a threaded connection. The dividing plane between the housing sections 5 and 6 is orientated substantially perpendicular to the longitudinal direction of the shafts 3 and 4.

The shafts 3 and 4 are each supported in two opposite ends 8 and 9 of the housing 2 by bearings 10 at the respective bearing points at each end. The bearings 10 take the form in this case of taper roller bearings but other types of bearings may also possibly be used.

The respective housing sections 5 and 6 are made of different materials with unequal longitudinal expansion coefficients, and in this case the first housing section 5 is made of aluminium and the second housing section 6 is made of cast iron. The housing section 5 thus has the larger longitudinal expansion coefficient. As may be seen in the drawing, the housing section 5, which has the length x, is substantially shorter than the second housing section 6, which has the length y. The total length of the housing is L, i.e. the sum of x and y. The shafts 3 and 4, which are made of steel, have in this context a length L corresponding to the length of the housing.

The ratio between the lengths x and y of the respective housing sections 5 and 6 is such that the longitudinal expansion of the housing 2 will be substantially equal to that of the shafts 3 and 4 when the gearbox is in operation. This means that the play set in the various bearings 10 at ambient temperature at the time of assembly will remain substantially constant when the gearbox is in operation.

Practical tests have shown that good results with regard to bearing play are achieved when, using the materials mentioned above, the length of the first housing section 5 amounts to about one-quarter of the total length L of the housing 2. In that case the length y of the second housing section 6 will be about three-quarters of the total length L of the housing 2.

Depending on the operating temperature in the gearbox and the materials adopted for the housing sections 5 and 6, the mutual proportioning of the housing sections 5 and 6 may of course need to be altered to achieve the desired results. For strength reasons, the shafts 3 and 4 are normally made of steel, so their longitudinal expansion coefficient normally remains unaffected by change of material of the housing sections.

As may be seen in the drawing, the housing sections 5 and 6 respectively are each made integral with a collar 11 and 12 for connecting to other parts (not depicted here) of the vehicle's power transmission. The shape of these collars may be adapted as necessary.

The housing 2 may possibly, e.g. because of its size, consist of more than two sections and be made of more than two different materials in order to achieve desired longitudinal expansion characteristics. This does however have the disadvantage of increasing the number of joints, possibly giving rise to sealing problems. The choice of materials is not limited to those indicated above, which leaves specialists free to adopt other suitable materials and combinations of materials.

## Claims

1. Gearbox for motor vehicle, provided with a housing (2) in which at least two shafts (3,4) are supported in two opposite ends (8,9) of the housing, which housing is of different material from the shafts and takes the form of sections (5,6), **characterised** in that the housing (2) is divided substantially perpendicular to the longitudinal direction of the shafts, that the housing sections (5,6) are made of different materials with different longitudinal expansion coefficients and that the ratio between the respective lengths (x,y) of the housing sections is such that the longitudinal expansion of the housing during operation will be substantially equal to the longitudinal expansion of the shafts (3,4) during operation.

2. Gearbox according to claim 1, **characterised** in that the housing consists of two sections (5,6).

3. Gearbox according to claim 2, **characterised** in that the housing section (5) which has the larger longitudinal expansion coefficient is shorter than the other housing section (6).

4. Gearbox according to claim 2 or 3, **characterised** in that the one housing section (5) is made of light metal and the other (6) of cast iron.

5. Gearbox according to claim 3 or 4, **characterised** in that the shorter housing section (5) is made of light metal and that the length of this housing section is approximately one-quarter of the length (L) of the housing (2).

6. Gearbox according to any one of claims 1-5, **characterised** in that the shafts (3,4) are supported by taper roller bearings (10).
